Europäisches Patentamt

European Patent Office

Office européen des brevets

(11) Veröffentlichungsnummer : **0 045 364**
**B1**

(12) # EUROPÄISCHE PATENTSCHRIFT

(45) Veröffentlichungstag der Patentschrift :
09.01.85

(21) Anmeldenummer : 81104540.0

(22) Anmeldetag : 12.06.81

(51) Int. Cl.⁴ : **G 06 K 13/103**, G 06 K 13/063,
B 65 H 3/46

(54) Transport- und Ausrichtvorrichtung zum Vereinzeln von Belegen.

(30) Priorität : 02.08.80 DE 3029458

(43) Veröffentlichungstag der Anmeldung :
10.02.82 Patentblatt 82/06

(45) Bekanntmachung des Hinweises auf die Patenterteilung : 09.01.85 Patentblatt 85/02

(84) Benannte Vertragsstaaten :
FR GB IT NL SE

(56) Entgegenhaltungen :
US-A- 3 108 801
US-A- 3 272 500
US-A- 3 743 275
IBM TECHNICAL DISCLOSURE BULLETIN, Band 2,
Nr. 5, Februar 1960, Seiten 3,4, Armonk, U.S.A., E.M.
VALENHRACH: "Pre-aligning device"

(73) Patentinhaber : **Kleindienst GmbH**
**Argonstrasse 8**
**D-8900 Augsburg (DE)**

(72) Erfinder : **Donner, Siegmar**
**Am Hopfengarten 38**
**D-8904 Friedberg (DE)**
Erfinder : **Strempler, Heinz-Günter**
**Wilh.-Hauff-Strasse 18**
**D-8900 Augsburg (DE)**
Erfinder : **Schmid, Manfred**
**Berglusstrasse 80**
**D-8900 Augsburg (DE)**

(74) Vertreter : **Ernicke, Hans-Dieter, Dipl.-Ing.**
**Schwibbogenplatz 2b**
**D-8900 Augsburg (DE)**

Jouve, 18, rue St-Denis, 75001 Paris, France

## Beschreibung

Die Erfindung bezieht sich auf eine Transport- und Ausrichtvorrichtung zum Vereinzeln von Belegen aus einem Belegstapel mit einer parallel zur Förderrichtung sich erstreckenden Ausrichtschiene und einer schräg zur Ausrichtschiene auf den jeweils obersten Beleg des Stapels einwirkenden Abzugseinrichtung, die als eine schräg zur Ausrichtschiene einstellbare Vorschubrolle ausgebildet ist.

Mit einer derartigen Vorrichtung, wie sie beispielsweise bekannt ist durch das IBM-Technical Disclosure Bulletin, Band 2, Nr. 5, Februar 1960, Seiten 3 und 4, können Belege mit voneinander abweichendem Format aus einem Stapel einer Belegverarbeitungsanlage, beispielsweise einem Datenlesegerät zugeführt werden. In einer solchen Belegverarbeitungseinrichtung muß der Beleg vereinzelt und in einer genau definierten Position ankommen, damit z. B. das Datenlesen sicher ausgeführt werden kann. Dieser Bedingung stehen praktische Schwierigkeiten entgegen. Beim Abzug der einzelnen Blätter durch die schräg eingestellte Vorschubrolle werden diese zwar an die Schiene herangeführt und durch diese mit ihrer Kante in einer Linie ausgerichtet. Es besteht jedoch hierbei stets die Gefahr, daß mehr als ein Beleg von dem Stapel abgezogen wird und daher der unten liegende Beleg nicht gelesen werden kann. Bei bekannten Einrichtungen (US-PS 3 108 801 und US-PS 3 272 500) ist deshalb eine an der Unterseite der Belege angreifende Bremsrolle vorgesehen, die entgegen der Förderrichtung rotiert und über eine Schlupfkupplung angetrieben ist. Diese Maßnahme hat sich jedoch nicht als ausreichend zuverlässig erwiesen.

Der Erfindung liegt daher die Aufgabe zugrunde, eine Transport- und Ausrichtvorrichtung (Vereinzelungsvorrichtung) für Belege, insbesondere Datenträger, unter Beachtung des vorstehend erwähnten grundsätzlichen Problems so auszugestalten, daß eine sichere und zuverlässige Vereinzelung der abgezogenen Belege erreicht wird bei kürzestmöglicher Förderstrecke, so daß die Transport- und Ausrichtvorrichtung auf engstem Raum zusammengefaßt und daher dafür geeignet ist, beispielsweise als Tisch- bzw. Bürogerät eingesetzt zu werden.

Ausgehend von der eingangs erwähnten bekannten Vorrichtung besteht das Wesen der Erfindung darin, daß die Vorschubrolle in Abhängigkeit von einer die Bewegung des vom Stapel abgezogenen Belegs feststellenden Steuerung vom obersten Beleg des Stapels kurzzeitig abhebbar ist, daß gegen eine im Anschluß an den Stapel angeordnete, entgegengesetzt zur Förderrichtung angetriebene und auf die Unterseite eines oder mehrerer abgezogener Belege einwirkende Bremsrolle eine drehbar gelagerte, auf die Oberseite des abgezogenen Belegs einwirkende Rolle in Abhängigkeit von einer, die Bewegung des abgezogenen Belegs feststellenden weiteren Steuereinrichtung kurzzeitig zur Bildung eines Walzenpaares anstellbar ist, und daß anschließend eine Vereinzelungsvorrichtung, bestehend aus einem auf die abgezogenen Belege einwirkenden Rollenpaar, vorgesehen ist, dessen obere Rolle gleichsinnig zur Förderrichtung und dessen untere Rolle entgegengesetzt hierzu angetrieben ist, wobei die obere Vereinzelungsrolle einen abschaltbaren Antrieb mit Freilaufeigenschaft entgegengesetzt zur Förderrichtung und einem der Dicke mindestens eines Beleges entsprechenden Abstand von der unteren Rolle aufweist.

Durch diese erfindungsgemäße Merkmalskombination wird eine einwandfreie und zuverlässige Vereinzelung eines jeden Belegs nach dem Abzug gewährleistet. Es werden nicht nur durch die schräg eingestellte Vorschubrolle evtl. nach dem Ausrichten des Papiers an der Ausrichtschiene bewirkte Stauchungen oder Beschädigungen des Papiers vermieden. Es werden auch aufeinanderliegende Belege mit Ausnahme des jeweils oben liegenden Belegs sicher und zuverlässig angehalten und auf den Stapel zurücktransportiert, da hierbei dann die Vorschubrolle angehoben ist. Dadurch, daß nicht die untere, entgegengesetzt zur Förderrichtung rotierende Bremsrolle sondern die mit ihr zusammenwirkende obere, in Förderrichtung angetriebene Vereinzelungsrolle einen Freilauf aufweist, der ihre Mitnahme entgegengesetzt zur Förderrichtung ermöglicht, wird erreicht, daß zwei Belege, die sich durch die üblichen, bekannten Brems- bzw. Vereinzelungsmaßnahmen doch nicht trennen lassen, in Abhängigkeit von einer geeigneten Steuerung wieder in den Stapel zurückbefördert werden. Zur Steuerung kann man beispielsweise eine Doppelabzugskontrolle bekannter Bauart einsetzen, welche die Dicke der abgezogenen Belege mißt und bei Vorhandensein von zwei oder mehr übereinanderliegenden Belegen einen Schaltimpuls auslöst, der den Antrieb der Vereinzelungsrolle abschaltet. Durch die vorerwähnte Freilaufeigenschaft bildet diese Vereinzelungsrolle mit der darunterbefindlichen, entgegengesetzt zur Förderrichtung umlaufenden Rolle ein Walzenpaar, das die dazwischen befindlichen doppelten oder mehrfachen Belege wieder auf den Stapel zurückfördert.

Die Vorrichtung nach der Erfindung weist zwar begreiflicherweise gegenüber bekannten Vereinzelungsvorrichtungen geringere Leistungsfähigkeit auf, weil durch das automatische Rückwärtsfördern unerwünschter Belege ein gewisser Zeitverlust eintritt. Bei den Geräten nach der Erfindung kommt es aber nicht darauf an, Spitzenleistungen zu erzielen, sondern die Möglichkeit zu bieten, solche Geräte in Büroräumen betreiben zu können, gegebenenfalls auf Bürotischen aufstellen zu können. Es wird mit der Erfindung eine sehr preisgünstige, gewichtsarme, sicher wirkende Vorrichtung geschaffen, die speziell dort eingesetzt werden kann, wo aufgrund des anfallenden Belegbedarfs die bekannten Vorrichtungen nicht wirtschaftlich eingesetzt werden können.

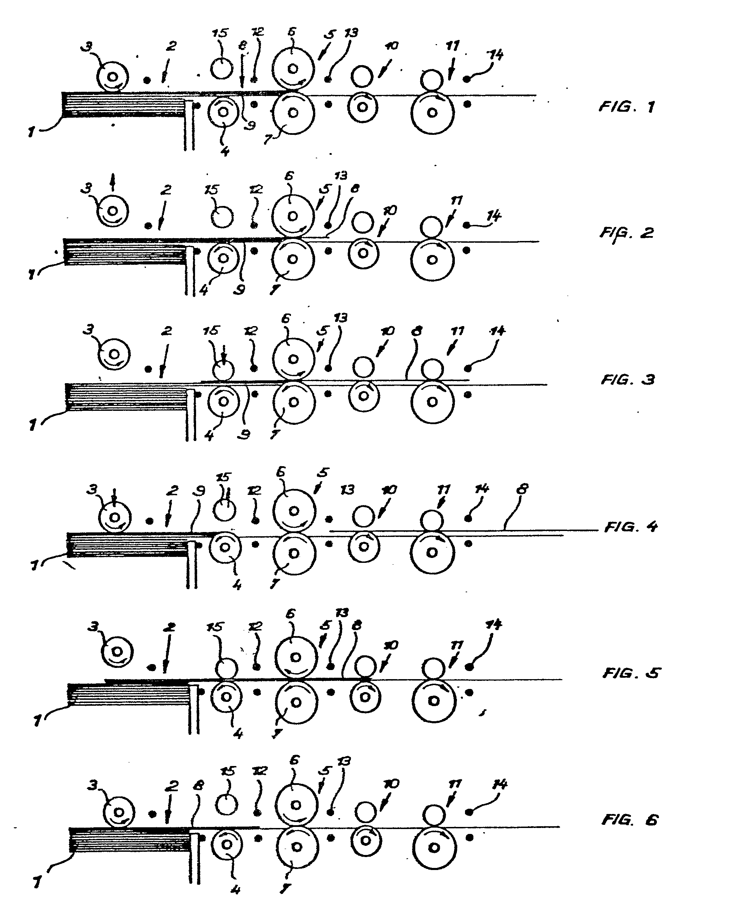

In der Zeichnung ist die Erfindung schematisch dargestellt, wobei die Figuren 1-6 unterschiedliche Bewegungs- und Steuerungsphasen zeigen.

In allen Figuren der Zeichnung ist mit 1 ein Belegstapel bezeichnet, in dem Belege 2 unterschiedlichen Formates so angeordnet sind, daß jeweils der oberste Beleg durch eine Vorschubrolle 3 dem Stapel 1 entnommen werden kann. Im Anschluß an den Stapel 1 befindet sich eine entgegengesetzt zur Förderrichtung umlaufende Bremsrolle 4, mit der zeitweise eine lose gelagerte Rolle 15 in Wirkkontakt zur Bildung eines Rollenpaares gebracht werden kann.

Dieser Bremsrolle 4 schließt sich eine Vereinzelungsvorrichtung 5 an, welche aus einer angetriebenen oberen Rolle 6 und einer angetriebenen unteren Rolle 7 besteht. Die Drehrichtung der oberen Rolle 6 ist in Förderrichtung, die Drehrichtung der unteren Rolle 7 entgegengesetzt zur Förderrichtung gewählt. Der Antrieb der oberen Rolle 6 ist abschaltbar ausgebildet. Außerdem weist diese obere Rolle 6 einen Freilauf in der Richtung auf, daß diese Rolle 6 bei abgeschaltetem Antrieb entgegengesetzt zur Förderrichtung als lose drehbar gelagerte Rolle über den Antrieb der unteren Rolle 7 bewegbar ist.

Dieser Vereinzelungsvorrichtung 5 schließt sich ein Kontroll-Rollenpaar 10 an, dessen untere Rolle in Förderrichtung angetrieben ist und dessen obere Rolle die Aufgabe hat, die Dicke der zwischen beiden Rollen hindurchgeführten Belege 2 bzw. 8 festzustellen und bei Überschreiten einer bestimmten Dicke einen Schaltimpuls auszulösen.

Mit 11 ist schließlich ein Abzugsrollenpaar bezeichnet, das den tatsächlich vereinzelten Beleg 8 der nächsten Bearbeitungsstation, z. B. einem Belegleser, zuführt.

Zwischen den einzelnen Rollengruppen befinden sich Kantentaster 12, 13, 14, deren Funktion nachstehend beschrieben wird.

In der Zeichnung ist die zum Ausrichten der Belege erforderliche Ausrichtschiene der Einfachheit halber nicht dargestellt. Sie erstreckt sich längs der Vorschubrichtung für die Belege. Die Vorschubrolle 3 ist in den Zeichnungen als Kreis der Einfachheit halber dargestellt. In Wirklichkeit ist diese Vorschubrolle 3 schräg zur Vorschubrichtung gelagert, so daß sie die Eigenschaft hat, die oberen Belege schräg zur Vorschubrichtung und in Richtung zur Ausrichtschiene zu bewegen.

Im Beispiel der Figur 1 ist die Grundeinstellung der Vorrichtung gezeigt. Die Vorschubrolle 3 wirkt auf den obersten Beleg 2 im Stapel 1 ein und zieht diesen schräg zur normalen Vorschubrichtung aus dem Stapel 1 und in Richtung zur nicht dargestellten Ausrichtschiene ab. Manchmal ist der Abzug von zwei oder mehr Belegen 2 nicht zu verhindern. Der Mitnahme mehrerer Belege wird zunächst durch die Bremsrolle 4 und dann durch die untere Rolle 7 der Vereinzelungsvorrichtung 5 entgegengewirkt.

Im Beispiel der Figur 2 ist nun dargestellt, daß tatsächlich der oberste Beleg (abgezogener Beleg 8) die Vereinzelungsvorrichtung 5 passiert, wohingegen die unteren, mitgenommenen Belege von den Rollen 4, 7 zurückgehalten werden. In diesem Zustand wird nun die Vorschubrolle 3 in Abhängigkeit vom Kantentaster 13, der vom vorauslaufenden Rand des abgezogenen Beleges 8 gesteuert wird, angehoben. Diese Anhebung der Vorschubrolle 3 ist schon deswegen zweckmäßig, damit die bereits an der Ausrichtschiene angelangten Belege nicht zusätzliche schräge Fördertendenz erhalten.

Sobald nun gem. Figur 3 der abgezogene Beleg 8 das Abzugsrollenpaar 11 erreicht und dessen vorausliegende Kante den Kantentaster 14 erregt hat, wird die lose gelagerte Rolle 15 abgesenkt. Sie bildet mit der Bremsrolle 4 ein Walzenpaar, das zur Folge hat, daß die in der Vereinzelungsvorrichtung 5 zurückgehaltenen unerwünschten Belege wieder in den Stapel 1 zurückgefördert werden. Dabei befindet sich die Vorschubrolle 3 immer noch in der angehobenen Stellung; sie läßt also die Rückwärtsbewegung der Belege 2 zu. Bei der in Figur 4 gezeichneten Position kann sich nun wieder die Vorschubrolle 3 senken, wohingegen die lose drehbar gelagerte Rolle 15 wieder angehoben wird. Es findet der nächste Abzugsvorgang gemäß Figuren 1-3 statt.

Die Lücke zwischen den vereinzelten Belegen 8 kann bei einem Ausführungsbeispiel etwa zwischen 120 bzw. 140 mm betragen.

In den Figuren 5 und 6 ist dargestellt, daß die Erfindung mit Vorteil auch bei solchen Vorrichtungen anwendbar ist, bei denen keine oder erst nach dem Stapel 1 stattfindende Ausrichtung der Belege erfolgt.

Die obere Rolle 6 der Vereinzelungsvorrichtung ist mit einem abschaltbaren Rotationsantrieb versehen und weist Freilaufeigenschaft entgegengesetzt zur normalen Förderrichtung auf. Wenn nämlich zwei Belege 2, 8 gleichzeitig aus dem Stapel 1 abgezogen werden und weder durch die Bremsrolle 4 noch durch die untere Rolle 7 der Vereinzelungsvorrichtung 5 zurückgehalten werden, dann wird beim Durchgang durch das Kontroll-Rollenpaar 10 die doppelte Belegdicke festgestellt. Diese Messung führt zu einem Schaltimpuls, der den Antrieb der oberen Rolle 6 im Sinne der Bewegungsrichtung gemäß Figuren 1-4 abstellt. Da die obere Rolle 6 Freilaufeigenschaft entgegengesetzt zur normalen Förderrichtung aufweist, wird sie nun durch den Kontakt über die Belege 2, 8 und die untere Rolle 7 entgegengesetzt zur normalen Förderrichtung mitgenommen, was zur Folge hat, daß die beiden oder mehreren, zwischen den Rollen 6, 7 befindlichen Belege 2, 8 insgesamt zum Stapel 1 zurückgeführt werden. Damit dies möglich ist, wird die lose drehbar gelagerte Rolle 15 nach dem Rücktransport wieder angehoben, wie dies in Figur 6 dargestellt ist.

## Anspruch

Transport- und Ausrichtvorrichtung zum Vereinzeln von Belegen aus einem Belegstapel (1) mit einer parallel zur Förderrichtung sich erstreckenden Ausrichtschiene und einer schräg zur Ausrichtschiene auf den jeweils obersten Beleg des Stapels (1) einwirkenden Abzugseinrichtung, die als eine schräg zur Ausrichtschiene einstellbare Vorschubrolle (3) ausgebildet ist, dadurch gekennzeichnet, daß die Vorschubrolle (3) in Abhängigkeit von einer die Bewegung des vom Stapel (1) abgezogenen Belegs (8) feststellenden Steuerung (13) vom obersten Beleg (2) des Stapels (1) kurzzeitig abhebbar ist, daß gegen eine im Anschluß an den Stapel (1) angeordnete, entgegengesetzt zur Förderrichtung angetriebene und auf die Unterseite eines oder mehrerer abgezogener Belege (8) einwirkende Bremsrolle (4) eine drehbar gelagerte, auf die Oberseite des abgezogenen Beleges (8) einwirkende Rolle (15) in Abhängigkeit von einer die Bewegung des abgezogenen Beleges feststellenden weiteren Steuerung (14) kurzzeitig zur Bildung eines Walzenpaares anstellbar ist, und daß anschließend eine Vereinzelungsvorrichtung, bestehend aus einem auf die abgezogenen Belege (8) einwirkenden Rollenpaar (6, 7), vorgesehen ist, dessen obere Rolle (6) gleichsinnig zur Förderrichtung und dessen untere Rolle (7) entgegengesetzt hierzu angetrieben ist, wobei die obere Vereinzelungsrolle (6) einen abschaltbaren Antrieb mit Freilaufeigenschaft entgegengesetzt zur Förderrichtung und einen der Dicke mindestens eines Beleges entsprechenden Abstand von der unteren Rolle (7) aufweist.

## Claim

Transporting and alignment device for isolating and singling out documents from a document pile (1) with an alignment rail extending parallel to the conveyor direction and a take-off device inclined to the said alignment rail and acting on the in each case uppermost document of the pile (1), said take-off device being formed as an adjustable feed roller (3) inclined relative to the alignment rail, characterised in that the feed roller (3) can be raised for a short period from the uppermost document (2) of the pile (1) depending on a control device (13) determining the movement of the document (8) removed from the pile (1), that a rotatably mounted roller (15) acting on the topside of the removed documents (8) can be adjusted for a short period relative to a braking roller (4) arranged in association with the pile (1) and driven in the direction opposite to the conveyor and acting on the underside of one or more removed documents (8), depending on a further control device (14) determining the movement of the removed document, to form a pair of rollers, and that an isolating device consisting of a pair of rollers (6, 7) acting on the removed documents (8) is then provided, whose upper roller (6) is driven in the same direction as the conveyor and whose lower roller (7) is driven in the opposite direction, wherein the upper isolating roller (6) has a disengageable drive with a freewheel facility opposed to the conveyor direction and is at a distance from the lower roller (7) corresponding to the thickness of at least one document.

## Revendication

Dispositif de transport et d'alignement pour séparer des documents d'une pile (1) de documents, comprenant un rail d'alignement s'étendant parallèlement au sens de transport et un dispositif d'extraction incliné par rapport au rail d'alignement, agissant sur le document supérieur de la pile (1) et agencé en rouleau d'avance (3) réglable, incliné par rapport au rail d'alignement, caractérisé en ce que le rouleau d'avance (3) peut être soulevé brièvement du document supérieur (2) de la pile (1) en fonction d'une commande (3) arrêtant le mouvement du document (8) extrait de la pile (1), en ce qu'un rouleau (15) monté rotatif, agissant sur la face supérieure du document (8) extrait peut, pour former un couple de rouleaux, être appliqué brièvement, en fonction d'une autre commande (14) arrêtant le mouvement du document extrait, sur un rouleau de freinage (4), qui est disposé à la suite de la pile (1), qui est entraîné dans le sens opposé au sens de transport et qui agit sur la face inférieure d'un document (8) extrait ou de plusieurs documents (8) extraits, et en ce qu'ensuite est prévu un dispositif de séparation constitué d'un couple de rouleaux (6, 7) agissant sur les documents (8) extraits, dont le rouleau supérieur (6) est entraîné dans le même sens que le sens de transport et dont le rouleau inférieur (7) est entraîné dans le sens opposé, le rouleau supérieur de séparation (6) présentant un entraînement pouvant être débranché, à propriété de roue libre dans le sens opposé au sens de transport et étant à une distance du rouleau inférieur (7) correspondant à l'épaisseur d'au moins un document.

FIG. 1

FIG. 2

FIG. 3

FIG. 4

FIG. 5

FIG. 6